# EUROPÄISCHE PATENTANMELDUNG

(11) **EP 1 522 752 A1**
(43) Veröffentlichungstag der Anmeldung: **13.04.2005**
(21) Anmeldenummer: 04020018.0
(22) Anmeldetag: 24.08.2004
(51) Int. Cl.: F16D 21/06, F16D 25/10, F16D 25/0638

(54) **Antriebsstrang**

(30) Priorität: 11.10.2003 EP 03023013
(71) Anmelder: BorgWarner Inc., Auburn Hills, MI 48326-1782 (US)
(72) Erfinder: Schäfer, Michael, 68723 Schwetzingen (DE); Hauck, Hans Jürgen, 76137 Karlsruhe (DE)
(74) Vertreter: Neunert, Peter Andreas

(57) **Zusammenfassung**

Die Erfindung betrifft einen Antriebsstrang mit einem Torsionsschwingungsdämpfer (12) mit einer Scheibe (14) und mit einem mit der Scheibe (14) federelastisch um eine Drehachse (ax) drehauslenkbar gekoppelten und die Scheibe (14) wenigstens teilweise umschließenden Torsionsschwingungsdämpfergehäuse (11, 13) und mit einer Kupplungseinrichtung, insbesondere einer nasslaufenden Anfahrkupplung (80d), mit einem um die Drehachse (ax) drehbaren Kupplungsgehäuse (11, 13). Um die Massenträgheit am Ausgang des Torsionsschwingungsdämpfers (12) zu erhöhen ist erfindungsgemäß vorgesehen, dass das Torsionsschwingungsdämpfergehäuse (11, 13) drehfest mit dem Kupplungsgehäuse (11, 13) verbunden ist.

## Beschreibung

Die Erfindung betrifft einen Antriebsstrang nach dem Oberbegriff des Patentanspruchs 1.

Antriebsstränge der gattungsgemäßen Art mit einem Torsionsschwingungsdämpfer mit einer Scheibe und mit einem mit der Scheibe federelastisch um eine Drehachse drehauslenkbar gekoppelten und die Scheibe wenigstens teilweise umschließenden Torsionsschwingungsdämpfergehäuse und mit einer Kupplungseinrichtung mit einem um die Drehachse drehbaren Kupplungsgehäuse sind aus dem Stand der Technik in einer Vielzahl von Abwandlungen bekannt.

Die EP 1 195 537 A1 beschreibt einen Antriebsstrang der gattungsgemäßen Art, bei dem das Kupplungsgehäuse einer Doppelkupplung in axial paralleler Bauart mit der Scheibe eines Torsionsschwingungsdämpfers verbunden ist, während das Torsionsschwingungsdämpfergehäuse mit einer Kurbelwelle verbunden ist.

Die DE 102 03 618 A1 beschreibt einen ähnlichen Antriebsstrang, bei dem das Kupplungsgehäuse einer Doppelkupplung in konzentrischer Bauart mit der Scheibe eines Torsionsschwingungsdämpfers verbunden ist, während das Torsionsschwingungsdämpfergehäuse mit einer Kurbelwelle verbunden ist.

Weiterhin sind aus dem betriebsinternen Stand der Technik Antriebsstränge mit einer nasslaufenden Anfahrkupplung bekannt, bei welchen das Kupplungsgehäuse direkt mit einer biegeund/oder taumelweichen Scheibe, einer sogenannten Flexplate, verbunden ist, welche wiederum mit einem mit der Kurbelwelle verbundenen Torsionsschwingungsdämpfer gekoppelt ist.

Obwohl sich die vorstehend angegebenen Ausführungen dem Grunde nach bewährt haben, ist es erforderlich, das Drehschwingungsverhalten des Antriebsstrangs zu verbessern.

Diese Aufgabe wird durch einen Antriebsstrang mit den Merkmalen des Patentanspruchs 1 erfindungsgemäß gelöst.

Vorteilhafte Ausführungen und Weiterbildungen der Erfindung sind in den Unteransprüchen angegeben.

Die Erfindung beruht auf der Erkenntnis, dass das Drehschwingungsverhalten dann verbessert wird, wenn der Torsionsschwingungsdämpfer ausgangsseitig eine hohe Dämpfersekundärmasse aufweist. Um den zur Bereitstellung einer hohen Dämpfersekundärmasse erforderlichen zusätzlichen Materialbedarf so gering wie möglich zu halten, ist erfindungsgemäß anstelle einer zusätzlichen Schwungmasse (z.B. in Form eines separaten Schwungrades) vorgesehen, dass das Torsionsschwingungsdämpfergehäuse drehfest mit dem Kupplungsgehäuse verbunden ist. Ein z.B. von einem Verbrennungsmotor erzeugtes Drehmoment wird folglich von Innen über die Scheibe und die federelastische Kopplung auf das Torsionsschwingungsdämpfergehäuse und damit das Kupplungsgehäuse übertragen. Die ausgangsseitige Sekundärmasse des Torsionsschwingungsdämpfers wird demzufolge durch das Torsionsschwingungsdämpfergehäuse und das Kupplungsgehäuse gebildet und ist damit groß gegenüber dem eingangsseitigen im wesentlichen allein durch die Scheibe gebildeten Anteil der Primärmasse.

Obwohl es grundsätzlich möglich ist, den Torsionsschwingungsdämpfer und die Kupplungseinrichtung als vollständig separate Bauteile auszuführen, ist es einerseits aus Gründen der Bauraumersparnis als auch aus Gründen der Materialersparnis sinnvoll, wenn das Torsionsschwingungsdämpfergehäuse und das Kupplungsgehäuse zusammen ein die Kupplungseinrichtung und den Torsionsschwingungsdämpfer gemeinsam umschließendes Umgehäuse bilden. Das kombinierte Torsionsschwingungsdämpfer- und Kupplungsgehäuse lässt sich dann beispielsweise aus zwei Halbschalen zusammensetzen, welche sich z.B. im Bereich des Torsionsschwingungsdämpfers überlappen können, um dort die Stabilität zu erhöhen. Die Kupplungseinrichtung kann bei derartiger Ausgestaltung auch zusammen mit dem Torsionsschwingungsdämpfer in der Art eines Moduls vorgefertigt werden, an welches weitere Komponenten angeflanscht werden können.

Häufig, insbesondere auch bei den in den Dokumenten EP 1 195 537 A1 und DE 102 03 618 A1 vorgestellten Kupplungen, ist neben einem zur Betätigung der Kupplung notwendigen Druckmittel zur Kühlung der Kupplungseinrichtung ein Kühlmittel vorgesehen. Dieses Kühlmittel befindet sich in beiden Fällen innerhalb eines zusätzlich vorgesehenen Gehäuses, welches die Kupplungs- und Torsionsschwingungsdämpfergehäuse und damit die Kupplungseinrichtung und den Dämpfer umschließt. Um die erforderliche Betriebsmittelmenge gering zu halten, ist es günstig, das Betriebsmittel aufnehmende Volumen klein zu halten. Erfindungsgemäß ist daher vorgesehen, dass das Umgehäuse selbst zur Aufnahme von Betriebsmittel, insbesondere Hydraulikflüssigkeit wie z.B. Druck- und/oder Kühlöl, gegen die Umgebung abgedichtet ist. Das zur Kupplungskühlung eingesetzte Kühlöl kann bei entsprechender Führung des Fluids zusätzlich als Medium zur Dämpfung der Drehbeweglichkeit von Primär- und Sekundärelement, d.h. Scheibe und Gehäuse des Torsionsschwingungsdämpfers verwendet werden.

Zur Abfederung axialer und/oder radialer Versätze sowie von Stößen oder dergleichen ist erfindungsgemäß im Antriebsstrang eine biege- und/oder taumelweiche Scheibe vorgesehen, welche, vorzugsweise an einem Innenumfang, z.B. drehfest, mit der Scheibe des Torsionsschwingungsdämpfers verbunden ist.

Zur Einstellung des Dämpfungsverhaltens des Systems kann weiter eine Schwungmasse vorgesehen sein, welche (der biegeund/oder taumelweichen Scheibe vorgeschaltet), vorzugsweise an einem Außenumfang, insbesondere drehfest, mit der biegeund/oder taumelweichen Scheibe verbunden ist.

Aus dem gleichen Grund kann eine Schwungmasse vorgesehen sein, welche, vorzugsweise an einem Innenumfang, insbesondere drehfest mit der Scheibe des Torsionsschwingungsdämpfers verbunden ist.

Ebenfalls aus den bereits oben genannten Gründen kann eine biege- und/oder taumelweiche Scheibe vorgesehen sein, welche, vorzugsweise an einem Außenumfang, insbesondere drehfest, mit der Schwungmasse verbunden ist. Die Schwungmasse ist in diesem Fall der biege- und/oder taumelweichen Scheibe nachgeschaltet.

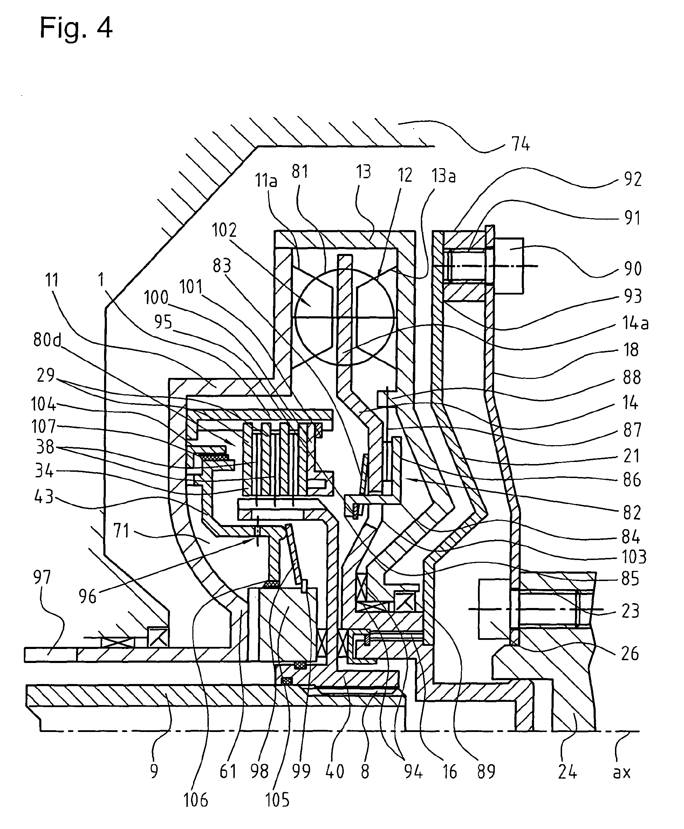

Wie sich bereits aus den o.a. Ausführungen ergibt, kann die Kupplungseinrichtung eine, vorzugsweise nasslaufende, Doppelkupplung in achsparalleler Bauart, eine, vorzugsweise nasslaufende, Doppelkupplung in konzentrischer Anordnung oder eine, vorzugsweise nasslaufende, Anfahrkupplung sein. Insbesondere bei nasslaufenden Anfahrkupplungen ergibt sich durch Verwendung des Kupplungsgehäuses auf der Dämpferabtriebseite (vgl. insbesondere das mit dem Bezugszeichen 11 in der Figur 4 gekennzeichnete Bauteil) eine günstige Aufteilung der Drehmassen hinsichtlich der Schwingungsisolation. Im in der Figur 4 dargestellten Fall ist das Verhältnis zwischen sekundär- und primärseitiger Drehmasse 4:1. In der konventionellen Ausführung der nassen Anfahrkupplung, wie sie beispielsweise in der EP 1 371 875 A1 beschrieben ist, ist das Verhältnis zwischen sekundär- und primärseitiger Drehmasse 1:4.

Vier Ausführungsbeispiele der Erfindung sind in der Zeichnung dargestellt und werden im Folgenden näher beschrieben. Es zeigen:
- Figur 1: ein erstes Ausführungsbeispiel eines erfindungsgemäßen Antriebsstrangs mit einer ersten Ausführungsvariante einer Doppelkupplung in achsparalleler Anordnung im Axialhalbschnitt,
- Figur 2: ein zweites Ausführungsbeispiel eines erfindungsgemäßen Antriebsstrangs mit einer zweiten Ausführungsvariante einer Doppelkupplung in achsparalleler Anordnung im Axialhalbschnitt,
- Figur 3: ein drittes Ausführungsbeispiel eines erfindungsgemäßen Antriebsstrangs mit einer dritten Ausführungsvariante einer Doppelkupplung in achsparalleler Anordnung im Axialhalbschnitt,
- Figur 4: ein viertes Ausführungsbeispiel eines erfindungsgemäßen Antriebsstrangs mit einer ersten Ausführungsvariante einer nasslaufenden Anfahrkupplung im Axialhalbschnitt,

In den Figuren bezeichnen gleiche Bezugszeichen gleiche oder funktionsgleiche Bestandteile.

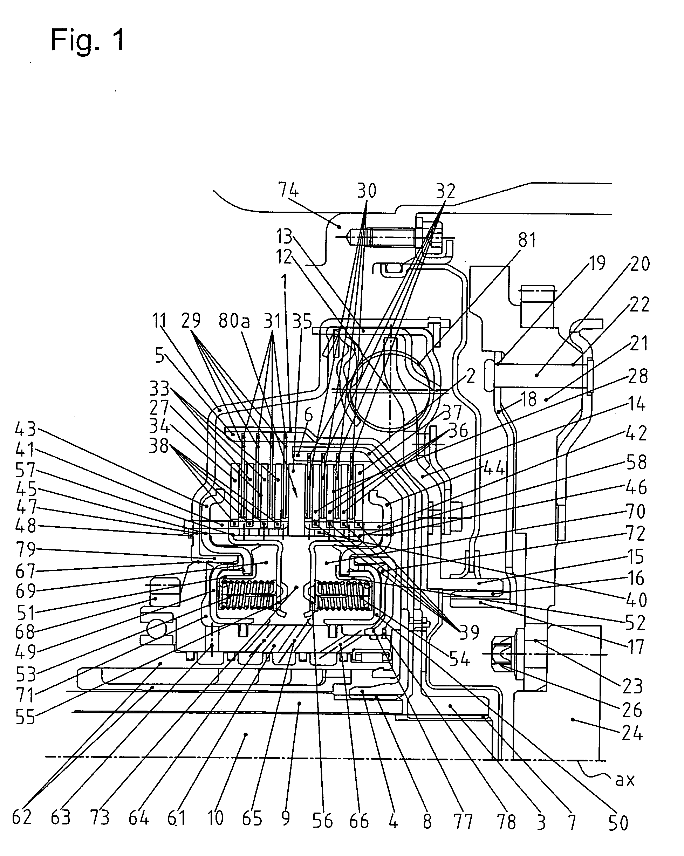

Die Figur 1 zeigt einen Ausschnitt eines ersten Ausführungsbeispiels eines erfindungsgemäßen Antriebsstrangs für ein Kraftfahrzeug mit einer biege-/taumelweichen Scheibe 18, mit einem Torsionsschwingungsdämpfer 12 und mit einer Doppelkupplung 80a in achsparalleler Anordnung.

Der rechten Seite der Zeichnungsfigur entnimmt man eine um eine Drehachse ax drehbare Kurbelwelle 24, welche beispielsweise mit einer Verbrennungskraftmaschine, einem Motor oder dergleichen gekoppelt ist. Diese rechte Seite stellt die Antriebsseite des Antriebsstrangs dar.

Auf der linken Seite des Zeichnungsblattes sind zwei um die Drehachse ax drehbare Getriebeeingangswellen, nämlich eine Zentral- oder Vollwelle 10 und eine Hohlwelle 9, zu sehen, welche beispielsweise mit einem hier nicht dargestellten Getriebe oder dergleichen gekoppelt sein können. Diese linke Seite stellt die Abtriebsseite des Antriebsstrangs dar.

Die erste Getriebeeingangswelle, nämlich die Zentral- oder Vollwelle 10, kann z.B. zum Betrieb aller ungeraden Gänge (z. B. 1, 3, 5 ...) und die zweite Getriebeeingangswelle, nämlich die Hohlwelle 9, kann z.B. zum Betrieb aller geraden Gänge (z. B. 2, 4, 6 ...) des Kraftfahrzeugs vorgesehen sein. Der Rückwärtsgang könnte sowohl der ersten Getriebeeingangswelle (Zentral- oder Voll welle 10), als auch der zweiten Getriebeeingangswelle (Vollwelle 9) des Getriebes zugeordnet sein.

Der Antriebsstrang umfasst neben der als Kurbelwelle ausgebildeten Antriebswelle 24 und den koaxial einander durchsetzend angeordneten Abtriebswellen 9, 10 ferner eine Schwungmasse 21, die oben erwähnte biege-/taumelweiche Scheibe 18, den vorstehend genannten Torsionsschwingungsdämpfer 12 sowie die vorstehend ebenfalls angegebene Doppelkupplung 80a in achsparalleler Anordnung.

Der gesamte Antriebsstrang ist von einer sogenannten Kupplungsglocke 74 umschlossen. Die Kupplungsglocke 74 umschließt demnach die beiden als nasslaufende Lamellenkupplungen ausgeführten Einzelkupplungen der Doppelkupplung 80a, den Drehschwingungsdämpfer 12, die biege- und/oder taumelweiche Scheibe 18 sowie die Schwungmasse 21.

Der Dreh- oder Torsionsschwingungsdämpfer 12 ist in an sich bekannter Art und Weise ausgebildet. Er umfasst im vorliegenden Ausführungsbeispiel ein antriebsseitiges Primärelement 14 und ein gegen die Kraft einer Federeinrichtung drehbar angeordnetes abtriebsseitiges Sekundärelement 11, 13. Das Primärelement 14 weist die Form einer Scheibe auf. Das Sekundärelement besteht im vorliegenden Ausführungsbeispiel aus zwei Halbschalen 11, 13. Die beiden Halbschalen 11, 13 des Sekundärelements bilden ein Torsionsschwingungsdämpfergehäuse. Dieses Torsionsschwingungsdämpfergehäuse nimmt einerseits das Primärelement 14 als auch die eine Mehrzahl von in Umfangsrichtung angeordnete Federpakete mit mehreren Schraubenfedern 81 umfassende Federeinrichtung auf.
Die beiden Halbschalen 11, 13 bilden zusammen ein die beiden einzelnen Kupplungen der Doppelkupplung umschließendes Kupplungsgehäuse.

Jede einzelne Kupplung der Doppelkupplung 80a umfasst jeweils einen Außenlamellenträger 1, 2 und einen gemeinsamen Innenlamellenträger 40. Der Außenlamellenträger der ersten Kupplung wird nachfolgend als erster Außenlamellenträger 1, der Außenlamellenträger der zweiten Kupplung wird im Folgenden als zweiter Außenlamellenträger 2 bezeichnet.

Die beiden Außenlamellenträger 1, 2 sind halbschalenförmig ausgebildet, wobei der erste Außenlamellenträger 1 den zweiten Außenlamellenträger 2 in axialer Richtung überragend umgreift. Der Innenlamellenträger 40 weist eine im Wesentlichen zylinderförmige Gestalt auf und erstreckt sich über die axial verlaufenden Bereiche der Halbschalen 1, 2.

Die beiden Außenlamellenträger 1, 2 weisen Innenverzahnungen 5, 6 auf, welche zur axial verschieblichen aber im Wesentlichen drehfesten Führung von im vorliegenden Fall jeweils vier entsprechende Außenverzahnungen 31, 32 aufweisenden Reiblamellen 29, 30 dienen. Letztere werden üblicherweise auch als Außenlamellen 29, 30 bezeichnet.

In entsprechender Weise sind am Außenumfang der den jeweiligen Außenlamellenträgern 1, 2 zugeordneten Innenlamellenträgerabschnitten des gemeinsamen Innenlamellenträgers 40 Außenverzahnungen 41, 42 angeordnet, in denen Innenverzahnungen aufweisende Reiblamellen, die sogenannten Innenlamellen 36, axial verschieblich aber drehfest geführt sind. Die beiden Innenlamellenträgerabschnitte werden durch eine gemeinsame Endplatte 35 voneinander getrennt.

An den beiden äußeren Enden des gemeinsamen Innenlamellenträgers 40 sind jeweils Druckplatten 34, 37 in gleicher Weise wie die vorstehend genannten Innenlamellen 36 axial verschieblich aber im Wesentlichen drehfest geführt.

Die äußeren Reiblamellen/Außenlamellen 29, 30, die inneren Reiblamellen/Innenlamellen 33, 36 sowie die beiden Druckplatten 34, 37 und die gemeinsame Endplatte 35 greifen wechselseitig verzahnungsartig in an sich bekannter Weise jeweils ein einer Kupplung zugeordnetes Lamellenpaket 27, 28 bildend ineinander.

Die beiden Lamellenpakete 27, 28 mit den entsprechenden Reiblamellen 29, 30, 33, 34, 35, 36, 37 sind somit auf dem gemeinsamen Innenlamellenträger 40 in axialer Richtung parallel zueinander angeordnet. Im vorliegenden Ausführungsbeispiel sind die Reibflächen aller Reiblamellen 29, 30, 33, 34, 35, 36, 37 im Wesentlichen gleich groß, sodass die einzelnen Kupplungen eine gleichwertige Leistungsfähigkeit aufweisen. Selbstverständlich ist es auch möglich, dass die Reibflächen der Reiblamellen verschieden große Durchmesser aufweisen.

Bestandteile der Kupplungen sind ferner nachfolgend im Detail beschriebene Kolben-/Zylindereinheiten, welche zur Betätigung der Kupplungen dienen. Insbesondere ist jeder Kupplung ein hydraulisch betätigbarer Betätigungskolben 43, 44 zugeordnet. Jeder dieser Betätigungskolben 43, 44 kann gegen eine der Druckplatten 34, 37 kraftübertragend und Reibschluss zwischen den einzelnen Reiblamellen 29, 30, 33, 34, 35, 36, 37 erzeugend und damit die jeweilige Kupplung betätigend gedrückt werden.

Die beiden Einzelkupplungen der Doppelkupplung 80a werden nach innen gerichtet betätigt, wobei die Reaktionskräfte gegen die gemeinsame Endplatte 35 wirken.

Der gemeinsame Innenlamellenträger 40 durchsetzt die beiden zur Betätigung der Kupplungen notwendigen ringförmigen Betätigungskolben 43, 44. Zu diesem Zweck weist der Innenlamellenträger jeweils endseitig über dem Außenumfang im Wesentlichen axial verlaufende Stege auf, welche entsprechende Öffnungen 45, 46 der jeweiligen Betätigungskolben 43, 44 verzahnungsartig durchgreifen. Einendseitig durchgreifen diese Stege auch korrespondierend hierzu in der Halbschale 11 vorgesehene Öffnungen 47. Die Öffnungen 47 in der Halbschale 11 (sowie in der Regel auch die Öffnungen 45, 46 in den Betätigungskolben 43, 44) sind in ihren Umfangsabmessungen so aufeinander abgestimmt, dass eine Relativverdrehung nicht möglich ist. Der Innenlamellenträger 40 ist auf diese Weise drehfest mit der Halbschale 11 verbunden.

Um eine axiale Verschiebung des Innenlamellenträgers 40 zu verhindern, ist ein Sicherungsring 48 vorgesehen, welcher den Innenlamellenträger 40 am Kupplungsgehäuse 11, 13 fixiert hält.

Die Halbschale 11 ist an einer Nahtstelle 67 starr mit einer Kupplungsnabe 61 verbunden. Diese Kupplungsnabe 61 umgreift die beiden Getriebeeingangswellen 9, 10 koaxial. Die Kupplungsnabe 61 trägt einen halbschalenförmigen Zylinder 77. Dieser Zylinder 77 ist mittels eines Sicherungsrings 78 in seiner Axialverschiebung begrenzt.

Bestandteil des Kupplungsgehäuses 11, 13 ist ein Zylinder 79 in zu dem Zylinder 77 korrespondierender Art. An den beiden Zylindern 77, 79 sind die jeweiligen Betätigungskolben 43, 44 axial verschieblich geführt. Zylinder 77 und Betätigungskolben 44 dienen als Abstützung und Zentrierung für den Innenlamellenträger 40.

Die Betätigungseinrichtungen für die beiden Kupplungen umfassen neben den vorerwähnten Betätigungskolben 43, 44, mittels derer die jeweiligen Druckplatten 34, 37 der Lamellenpakete 27, 28 in Richtung der gemeinsamen Endplatten 35 verschoben werden können, jeweils einen Druckkolben 49, 50, einen Kolben 51, 52, einen Ausgleichskolben 55, 56 sowie eine Mehrzahl in Umfangsrichtung angeordneter Schraubenfedern 53, 54. Die jeweiligen Betätigungskolben 43, 44 stützen sich nach außen gegen die jeweiligen Druckkolben 49, 50 ab, welche axial verschieblich an den Zylindern 79, 77 und am Außenumfang der Kupplungsnabe 61 geführt sind. Nach innen gerichtet stützen sich die Betätigungskolben 43, 44 gegen die Kolben 51, 52 ab. Diese wiederum stützen sich nach innen gerichtet gegen die Schraubenfedern 53, 54 ab. Die Schraubenfedern 53, 54 sind nach innen gerichtet gegen die Außenflächen der Kompensationskolben 55, 56 abgestützt. Diese Kompensationskolben 55, 56 stützen sich mit deren Innenflächen gegen radial nach innen gerichtete umlaufende Umfangsstege 57, 58 am Innenlamellenträger 40 ab.

Obwohl das gesamte Kupplungssystem unmittelbar auf der zweiten Getriebeeingangswelle, nämlich der Hohlwelle 9, gelagert werden könnte, ist bei der vorliegenden Ausführungsform ein separates flanschartiges Bauteil, nachfolgend als Träger 62 bezeichnet, vorgesehen, welches die beiden Getriebeeingangswellen, die Hohlwelle 9 und die Vollwelle 10, koaxial umgreift und auf welchem die Kupplungsnabe 61 drehbar um die Drehachse ax gelagert ist. Zur Lagerung der Kupplungsnabe 61 auf dem Träger 62 werden vorliegend Wälzlager verwendet. Als Alternative für niedrige Kosten können Gleitlager verwendet werden.

Der Träger 62 kann einteilig oder sowohl axial als auch radial mehrteilig ausgeführt sein. Im vorliegenden Fall ist der Träger 62 zweiteilig ausgeführt. Er besteht aus einem Mantel und einer von diesem umschlossenen Buchse. Die zylindermantelförmige Buchse weist in ihrem Außenumfang in axialer Richtung verlaufende, unterschiedlich lange Längsnuten auf. Der Mantel weist korrespondierend zur Anordnung der vorerwähnten Längsnuten vier in Umfangsrichtung verlaufende Nuten auf. Diese Umfangsnuten sind über radial verlaufende hier nicht dargestellte Öffnungen mit den entsprechenden Längsnuten verbunden.

Korrespondierend zu den Umfangsnuten weist die Kupplungsnabe 61 vier im Wesentlichen radial und zum Teil axial geneigt verlaufende Öffnungen auf, welche nachfolgend als Hydraulikflüssigkeitskanäle 63, 64, 65 und 66 bezeichnet sind. Über diese Hydraulikflüssigkeitskanäle 63, 64, 65, 66 erfolgt eine Versorgung der durch die Kolben 43, 44, 49, 50, 55, 56 gebildeten Volumina (erster Hydraulikflüssigkeitsbetätigungsraum 71, zweiter Hydraulikflüssigkeitsbetätigungsraum 72, erster Hydraulikflüssigkeitsausgleichsraum 69, zweiter Hydraulikflüssigkeitsausgleichsraum 70, Kühlflüssigkeitsraum 73) mit Hydraulikflüssigkeit.

Über den ersten Hydraulikflüssigkeitskanal 63 kann der erste Hydraulikflüssigkeitsbetätigungsraum 71 mit Hydraulikflüssigkeit druckbeaufschlagt werden. Dieser Hydraulikflüssigkeitsdruck drückt den Druckkolben 49 und damit den Betätigungskolben 45 und den Kolben 51 entgegen dem Druck der Schraubenfedern 53 nach innen. Eine derartige Verschiebung des Betätigungskolbens 45 hat zur Folge, dass dessen Außenumfang gegen die Druckplatte 34 der ersten Kupplung diese betätigend gedrückt wird.

In gleicher Weise kann über den vierten Hydraulikflüssigkeitskanal 66 der zweite Hydraulikflüssigkeitsbetätigungsraum 72 mit Hydraulikflüssigkeit druckbeaufschlagt werden. Auf Grund dieses Hydraulikflüssigkeitsdrucks wird der Druckkolben 50 und damit der Betätigungskolben 44 und der Kolben 52 entgegen dem Druck der Schraubenfedern 54 nach innen gedrückt. Dies hat in entsprechender Weise zur Folge, dass der Außenumfang des Betätigungskolbens 44 gegen die Druckplatte 37 der zweiten Kupplung diese betätigend gedrückt wird.

Über die beiden Hydraulikflüssigkeitskanäle 64 und 65 werden einerseits die Hydraulikflüssigkeitsausgleichsräume 69, 70 als auch der Kühlflüssigkeitsraum 73 mit Hydraulikflüssigkeit befüllt.

Die Hydraulikflüssigkeit in den Hydraulikflüssigkeitsausgleichsräumen 69, 70 dient dazu, einen fliehkraftbedingten Hydraulikflüssigkeitsgegendruck zu erzeugen, welcher der fliehkraftbedingten Druckzunahme im jeweiligen Hydraulikflüssigkeitsbetätigungsraum 71, 72 entgegen wirkt.

Die Hydraulikflüssigkeit im Kühlflüssigkeitsraum 73 wird zur Kühlung der Reiblamellen 29 30 33, 34, 35, 36, 37 durch radial verlaufende (hier nicht dargestellte) Öffnungen im Innenlamellenträger 40 zu den Reiblamellen 29, 30, 33, 34, 35, 36, 37 geführt.

Die vorstehend im Detail beschriebenen Komponenten des Antriebsstranges sind wie folgt miteinander verbunden:

Die Kurbelwelle 24 ist mit dem Innenumfang der Schwungmasse 21 verschraubt (Schraube 26, Bohrung 23). Der Außenumfang der Schwungmasse 21 ist mit dem Außenumfang der biege-/taumelweichen Scheibe 18 vernietet (Außenrandbohrung 19, Niete 20, Bohrung 22). Der Innenumfang der biege-/taumelweichen Scheibe 18 trägt einen Innenflansch 17 mit einer Außenverzahnung. Diese Außenverzahnung greift in der Art einer Steckverzahnung 16 in eine Innenverzahnung des Primärelements 14 des Torsionsschwingungsdämpfers 12 eine drehfeste Verbindung herstellend ein.

Die das Sekundärelement bildende Halbschale 13 des Torsionsschwingungsdämpfers 12 ist in vorstehend beschriebener Weise drehfest mit dem Innenlamellenträger 40 der Doppelkupplung verbunden.

Die beiden Kupplungen (Lamellenpakete 27, 28; Betätigungskolben 44, 45) verbinden den Innenlamellenträger 40 schaltbar mit den Außenlamellenträgern 1, 2, welche wiederum über die Flansche 3, 4 mittels Steckverzahnungen 7, 8 drehfest mit den beiden Getriebeeingangswellen 9, 10 verbunden sind.

Ein über die Kurbelwelle 24 eingeleitetes Drehmoment kann also mittels der Doppelkupplung auf eine der beiden Getriebeeingangswellen 9, 10 übertragen werden.

Der Vollständigkeit halber sei erwähnt, dass eine über die Kurbelwelle 24 eingeleitete Drehbewegung um die Drehachse ax über ein an der Kupplungsnabe 61 angeordnetes Pumpenantriebszahnrad 68 auch eine hier nicht dargestellte Hydropumpe zur Bereitstellung des vorstehend erwähnten Hydraulikflüssigkeitsdrucks antreiben kann.

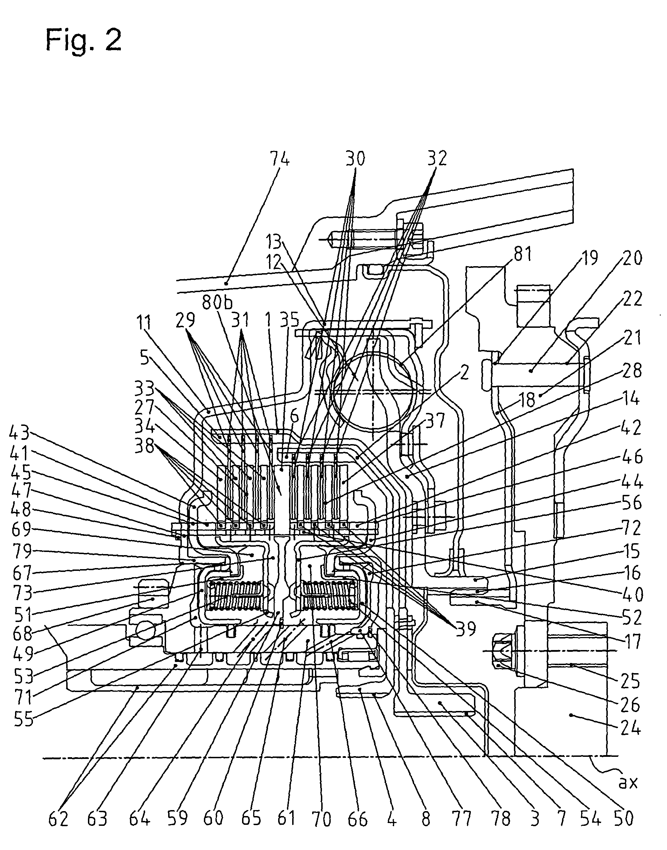

Die Figur 2 zeigt einen Ausschnitt aus einem weiteren erfindungsgemäßen Antriebsstrang für ein Kraftfahrzeug mit einer biege-/taumelweichen Scheibe 18, mit einem Torsionsschwingungsdämpfer 12 und mit einer Doppelkupplung 80b in achsparalleler Anordnung.

Das in der Figur 2 dargestellte Ausführungsbeispiel eines erfindungsgemäßen Antriebsstrangs unterscheidet sich von dem vorstehend beschriebenen gemäß der Figur 1 lediglich in der besonderen Ausführung der Doppelkupplung 80b.

Bei der in der Figur 2 dargestellten Doppelkupplung 80b stützen sich die Kompensationskolben 55, 56 nicht gegen an dem Innenlamellenträger angeordnete umlaufende Stege 57, 58 ab, sondern gegen ein Ringelement 59, welches durch einen Sicherungsring 60 an der Kupplungsnabe 61 anschlagbegrenzt abgestützt ist.

Neben der die Kompensationskolben 55, 56 und die Betätigungseinrichtungen bestehend aus Betätigungskolben 43, 44, Druckkolben 43, 50, Kolben 51, 52 und Schraubenfedern 53, 54 in axialer Richtung abstützenden Funktion hat das Ringelement 59 die Aufgabe den Hydraulikflüssigkeitsfluss zu den Reiblamellen 29, 30, 33, 34, 35, 36, 37 zu leiten. Zu diesem Zweck weist das Ringelement 59 außenumfangsseitig eine Verdickung auf, welche einströmende Hydraulikflüssigkeit in axiale Richtung umlenkt.

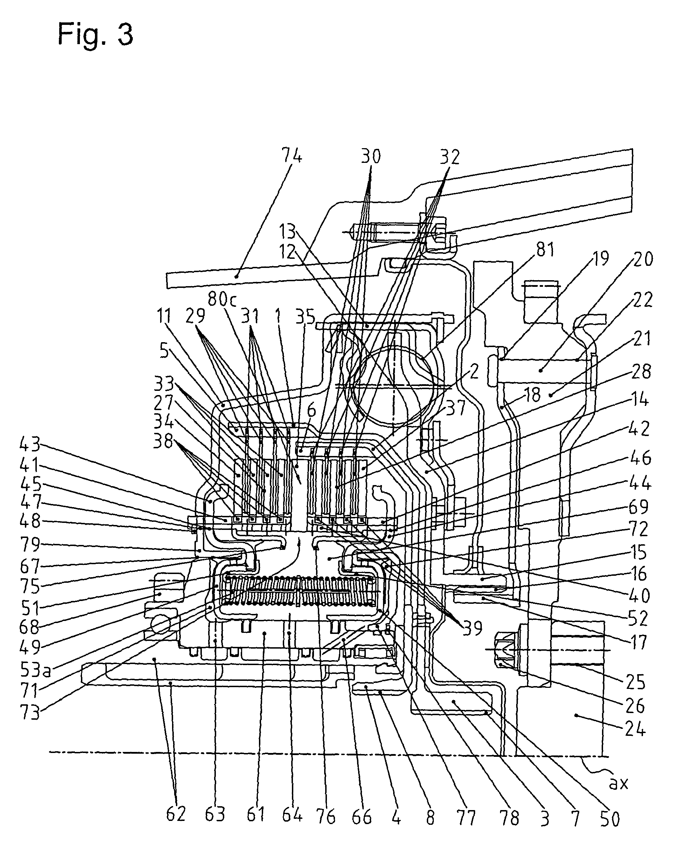

Die Figur 3 zeigt einen Ausschnitt aus einem weiteren Antriebsstrang der vorstehend angegebenen Art mit einer dritten Ausführungsvariante einer Doppelkupplung 80c.

Bei dem in der Figur 3 dargestellten Ausführungsbeispiel unterscheidet sich die Doppelkupplung 80c von denen gemäß den ersten beiden Ausführungsbeispielen darin, dass auf die Kompensationskolben 55, 56 vollständig verzichtet wurde.

Anstelle jeweils den einzelnen Betätigungskolben 43, 44 zugeordneten Schraubenfedern 53, 54 sind nunmehr eine Mehrzahl in Umfangsrichtung angeordneter Schraubenfedern 53a vorgesehen, gegen welche der Betätigungskolben 43 einendseitig über den Kolben 51 und der Betätigungskolben 44 andersendseitig über den Kolben 52 abgestützt ist.

Anstelle der beiden Kompensationskolben 55, 56 sind nunmehr zwei Kühlflüssigkeitsleitbleche 75, 76 vorgesehen, welche starr mit dem Innenlamellenträger verbunden sind und welche die Hydraulikflüssigkeit zu den Reiblamellen 29, 30, 33, 34, 35, 36, 37 zu deren Kühlung leiten.

Die Figur 4 zeigt einen Ausschnitt eines vierten Ausführungsbeispiels eines erfindungsgemäßen Antriebsstrangs für ein Kraftfahrzeug mit einer Antriebswelle in Form einer Kurbelwelle 24, mit einer biege-/taumelweichen Scheibe 18, mit einer Schwungmasse 21, mit einem Torsionsschwingungsdämpfer 12, mit einer nasslaufenden Anfahrkupplung 80d und mit einer Abtriebswelle in Form einer Getriebeeingangswelle 9.

Der rechten Seite der Zeichnungsfigur entnimmt man die um eine Drehachse ax drehbare Kurbelwelle 24, welche beispielsweise mit einer Verbrennungskraftmaschine, einem Motor oder dergleichen gekoppelt ist. Diese rechte Seite stellt die Antriebsseite des Antriebsstrangs dar.

Auf der linken Seite des Zeichnungsblattes ist die um die Drehachse ax drehbare Getriebeeingangswelle, nämlich die Hohlwelle 9 zu sehen, welche mit einem hier nicht dargestellten Getriebe gekoppelt ist. Diese linke Seite stellt die Abtriebsseite des Antriebsstrangs dar.

Der gesamte Antriebsstrang ist wie in den vorangegangenen Ausführungsbeispielen von einer sogenannten Kupplungsglocke 74 umschlossen. Die Kupplungsglocke 74 umschließt demnach die Anfahrkupplung 81, den Drehschwingungsdämpfer 12, die Schwungmasse 21 sowie die biege- und/oder taumelweiche Scheibe 18.

Der Torsionsschwingungsdämpfer 12 ist auch hier in an sich bekannter Art und Weise ausgebildet. Er umfasst im vorliegenden Ausführungsbeispiel ein antriebsseitiges Primärelement 14 und ein gegen die Kraft einer Federeinrichtung 102 und einer Reibeinrichtung 82 um die Drehachse ax drehbar angeordnetes abtriebsseitiges Sekundärelement 11, 13. Das Primärelement weist die Form einer Scheibe 14 auf. Das Sekundärelement besteht im vorliegenden Ausführungsbeispiel aus zwei Halbschalen 11, 13.

Die Federeinrichtung 102 umfasst eine Mehrzahl von in Umfangsrichtung angeordneten Federpaketen, welche jeweils wiederum mehrere Schraubenfedern 81 umfassen. Ein jeweiliges Federpaket stützt sich zur federelastischen Kopplung von Primär- und Sekundärelement 11, 13, 14 einendseitig gegen einen Mitnehmer 14a des Primärelements 14 und andersendseitig gegen entsprechende Mitnehmer 11a, 13a des Sekundärelements 11, 13 ab.

Die parallel zur Federeinrichtung 102 wirkende Reibeinrichtung 82 umfasst ein Ringteil 84 mit in Achsrichtung verlaufenden Fingern, welche durch entsprechende Öffnungen 103 in der (Primär-) Scheibe 14 hindurchgeführt sind. Die Enden der Finger des Ringteils 84 verlaufen in radialer Richtung nach innen und bilden dabei einen Stützkragen 85. Auf der anderen Seite verläuft das Ringteil 84 scheibenförmig einen Druckkragen 86 bildend radial nach außen. In Achsrichtung zwischen dem Druckkragen 86 und der (Primär-) Scheibe 14 befindet sich eine ringförmige auf beiden Stirnflächen Reibbeläge tragende Reiblamelle 87. Die Reiblamelle 87 weist außenumfangsseitig eine Außenverzahnung auf, welche in eine Innenverzahnung eines einstückig mit der Halbschale 13 des Sekundärelements des Torsionsschwingungsdämpfers 12 verbundenen und in axialer Richtung zum Innern des Torsionsschwingungsdämpfers 12 weisenden Haltekragens 88 eingreift. Auf diese Weise ist die Reiblamelle 87 axial verschieblich aber drehfest mit der Halbschale 13 des Sekundärelements 11, 13 verbunden. Weiterhin ist eine Tellerfeder 83 vorgesehen, welche sich einerseits gegen die (Primär-) Scheibe 14 und andererseits mittels eines Sprengrings 95 gehalten gegen den Stützkragen 85 abstützt. Die Federkraft der Tellerfeder 83 drückt den Druckkragen 86 einen Reibschluss erzeugend gegen die Reiblamelle 87 und die (Primär-) Scheibe 14.

Die beiden Halbschalen 11, 13 des Sekundärelements bilden ein Torsionsschwingungsdämpfergehäuse. Dieses Torsionsschwingungsdämpfergehäuse nimmt sowohl das Primärelement 14 als auch die Federeinrichtung 102 und die Reibeinrichtung 82 auf.

Die Anfahrkupplung 80d umfasst neben den das Kupplungsgehäuse bildenden Halbschalen 11, 13 einen Außenlamellen 29 tragenden Außenlamellenträger 1 und einen Innenlamellen 38 tragenden Innenlamellenträger 40 sowie eine Betätigungskolben/Zylinder-Einheit zum Betätigen der Kupplung 80d.

Die Außenlamellen 29 weisen am Außenumfang eine Außenverzahnung auf, welche in eine am Innenumfang des mit der Halbschale 11 drehfest verbundenen Außenlamellenträgers 1 angebrachte Innenverzahnung eingreifen und dadurch drehfest, aber axial verschieblich geführt sind. Die Innenlamellen 38 weisen am Innenumfang eine Innenverzahnung auf, welche in eine am Außenumfang des Innenlamellenträgers 40 angebrachte Außenverzahnung eingreifen und dadurch drehfest, aber axial verschieblich geführt sind. Die einem Betätigungskolben 43 nächstliegende Außenlamelle bildet eine Druckplatte 34, die dem Betätigungskolben 40 entferntestliegende Außenlamelle bildet eine Endplatte 100. Diese Endplatte 100 ist mittels eines Sicherungsrings 101 gegen ein Verschieben in eine axiale Richtung gesichert.

Die Betätigungskolben/Zylinder-Einheit umfasst den vorerwähnten Betätigungskolben 43 und zwei mit der Halbschale 11 drehfest verbundene Zylinder 104, 105 mittels der der Betätigungskolben 43 axial verschieblich und gegen die Umgebung mit Hilfe von Lippendichtungen 106, 107 abgedichtet geführt ist. Der Betätigungskolben 43 ist mittels einer von einem Sicherungsring 99 an dem Zylinder 105 gehaltenen Tellerfeder 98 federnd über eine drehfest mit der Schale 11 verbundenen Kupplungsnabe 105 an dem aus den Halbschalen 11, 13 bestehenden Kupplungsgehäuse abgestützt.

Der Betätigungskolben 43, die Halbschale 11 und die beiden Zylinder 104, 105 begrenzen einen Hydraulikflüssigkeitsbetätigungsraum 71, dem über ein entsprechendes Kanalsystem ein Betriebsmedium, nämlich eine Hydraulikflüssigkeit, zum Betätigen der Kupplung 80d mit Hilfe des Betätigungskolbens 43 zu- sowie wieder abführbar ist. Der Betätigungskolben 43 weist ferner eine Mehrzahl über dem Umfang verteilte Blendenöffnungen 96 auf, über welche Druckmedium zur Kupplungskühlung abgezweigt wird.

Im vorliegenden Fall ist das Gehäuseende 97 zur Integration eines Antriebs einer Hydraulikpumpe zur Versorgung von Kupplung 80d und Getriebe mit Druck- und Kühlmedium in die Kupplungsglocke 74 ausgebildet. Das Betriebsmedium (Druckmedium und Kühlmedium) wird im zylindrischen Raum zwischen dem Gehäuseende 97 des Pumpenantriebs und der Getriebeeingangswelle 9 zugeführt. Von dort gelangt das Druckmedium in den Hydraulikflüssigkeitsbetätigungsraum 71 sowie über die Blendenöffnungen 96 zu den Lamellen 29, 38. Das Kühlmedium gelangt durch die als Hohlwelle 9 ausgebildete Getriebeeingangswelle in den Hydraulikkreislauf zurück.

Die einzelnen Komponenten des Antriebsstrangs sind wie folgt miteinander verbunden:

Die Kurbelwelle 24 weist in der Nähe ihres Außenumfangs eine Mehrzahl in Umfangsrichtung angeordneter Gewindebohrungen 23 auf. Korrespondierend hierzu weist die biege-/taumelweiche Scheibe 18 (häufig wird diese auch als Flexplate bezeichnet) in der Nähe ihres Innenumfangs eine Mehrzahl an Bohrungen auf. Mit Hilfe von Schrauben 26 ist die Flexplate 18 mit der Kurbelwelle 24 verschraubt. Die Schwungmasse 21 weist außenumfangsseitig einen an einer Schweißstelle 93 angeschweißten Ring 92 auf. Dieser Ring weist in Umfangsrichtung eine Mehrzahl an Gewindebohrungen 91 auf. Korrespondierend zu den Gewindebohrungen 91 weist die Flexplate 18 außenumfangsseitig Öffnungen auf. Mit Hilfe von Schrauben 90 ist die Flexplate 18 mit der Schwungmasse 21 verschraubt. Die Schwungmasse 21 ist an ihrem Innenumfang drehfest beispielsweise über eine Steckverzahnung 16 mit der das Primärelement bildenden Scheibe 14 des Torsionsschwingungsdämpfers 12 verbunden. Die Scheibe 14 ist über die Federeinrichtung 102 federelastisch und um die Drehachse ax drehbar mit den das Sekundärelement bildenden und sowohl das Torsionsschwingungsdämpfergehäuse als auch das Kupplungsgehäuse darstellenden, drehfest miteinander verbundenen Halbschalen 11, 13 gekoppelt. Von der Halbschale 11 besteht eine drehfeste Verbindung zum Außenlamellenträger 1 und den von diesem getragenen Außenlamellen 29. Die wechselweise benachbart zu den Außenlamellen 29 angeordneten Innenlamellen 34 werden in entsprechender Weise von dem Innenlamellenträger 40 drehfest gehalten. Der Innenlamellenträger 40 wiederum ist über eine Steckverzahnung 8 drehfest mit der die Abtriebs- oder Getriebeeingangswelle darstellenden Hohlwelle 9 verbunden.

Die Scheibe 14 und die mit der Flexplate 18 verbundene scheibenförmige Schwungmasse 21 bilden zusammen einen Torsionsschwingungsdämpfereingang. Die Scheibe 14 und die scheibenförmige Schwungmasse 21 sind über eine Verzahnung 16 dichtend voneinander getrennt, um eine Montierbarkeit der Anordnung sicherzustellen. Der Torsionsschwingungsdämpferausgang umfasst das eigentliche Kupplungsgehäuse mit den beiden Halbschalen 11, 13 und der auf dem Innenlamellenträger 40 der Anfahrkupplung 80d um die Drehachse ax drehbar gelagerte Kupplungsnabe 61 sowie den Außenlamellenträger 1, die Außenlamellen 29 und die Betätigungskolben/Zylinder-Einheit mit dem Betätigungskolben 43 und dessen Rückstellfeder 98 sowie den den Betätigungskolben 43 führenden Zylindern 104, 105. Torsionsschwingungsdämpfereingang und Torsionsschwingungsdämpferausgang sind mittels entsprechender Lager 94 um die Drehachse ax drehbar zueinander gelagert und gegenüber der durch die Kupplungsglocke 74 definierten Umgebung abgedichtet.

Ist die Kurbelwelle 24 entsprechend der obigen Annahme mit einem Verbrennungsmotor verbunden, so wird das Motormoment über die Kurbelwelle 24, die Flexplate 18, die Schwungmasse 21 und den Torsionsschwingungsdämpfer 12 in die Anfahrkupplung eingeleitet. Ist die Kupplung 80d betätigt, so wird das Motormoment ausgehend von den vom Außenlamellenträger 1 getragenen Außenlamellen 29 auf die Innenlamellen 38 übertragen. Von den Innenlamellen 38 erfolgt eine Momentenübergabe auf den Innenlamellenträger 40 und von dort weiter auf die Hohlwelle 9.

Durch die geschilderte Anordnung ergibt sich gegenüber dem bisherigen Aufbau nasser Anfahrkupplungen mit Dämpfer, bei dem das Kupplungsgehäuse direkt mit der Flexplate verbunden ist, eine wesentlich größere Massenträgheit am Torsionsschwingungsdämpferausgang.

### Bezugszeichenliste

- 1: erster Außenlamellenträger
- 2: zweiter Außenlamellenträger
- 3: erster Flansch
- 4: zweiter Flansch
- 5: Innenverzahnung
- 6: Innenverzahnung
- 7: Steckverzahnung
- 8: Steckverzahnung
- 9: Hohlwelle
- 10: Vollwelle
- 11: Halbschale
- 11a: Mitnehmer
- 12: Torsionsschwingungsdämpfer
- 13: Halbschale
- 13a: Mitnehmer
- 14: Scheibe
- 14a: Mitnehmer
- 15: Primärflansch
- 16: Steckverzahnung
- 17: Innenflansch
- 18: biege-/taumelweiche Scheibe
- 19: Außenrandbohrung
- 20: Niete
- 21: Schwungmasse
- 22: Bohrung
- 23: Bohrung
- 24: Kurbelwelle
- 25: Gewindebohrung
- 26: Schraube
- 27: erstes Lamellenpaket
- 28: zweites Lamellenpaket
- 29: Außenlamelle
- 30: Außenlamelle
- 31: Außenverzahnung
- 32: Außenverzahnung
- 33: Innenlamelle
- 34: Druckplatte
- 35: Endplatte
- 36: Innenlamelle
- 37: Druckplatte
- 38: Innenverzahnung
- 39: Innenverzahnung
- 40: Innenlamellenträger
- 41: Außenverzahnung
- 42: Außenverzahnung
- 43: erster Betätigungskolben
- 44: zweiter Betätigungskolben
- 45: Öffnung
- 46: Öffnung
- 47: Öffnung
- 48: Sicherungsring
- 49: Druckkolben
- 50: Druckkolben
- 51: Kolben
- 52: Kolben
- 53: Schraubenfeder
- 53a: Schraubenfeder
- 54: Schraubenfeder
- 55: Kompensationskolben
- 56: Kompensationskolben
- 57: Umfangssteg
- 58: Umfangssteg
- 59: Ringelement
- 60: Sicherungsring
- 61: Kupplungsnabe
- 62: Träger
- 63: Hydraulikflüssigkeitskanal
- 64: Hydraulikflüssigkeitskanal
- 65: Hydraulikflüssigkeitskanal
- 66: Hydraulikflüssigkeitskanal
- 67: Nahtstelle
- 68: Pumpenantriebszahnrad
- 69: erster Hydraulikflüssigkeitsausgleichsraum
- 70: zweiter Hydraulikflüssigkeitsausgleichsraum
- 71: erster Hydraulikflüssigkeitsbetätigungsraum
- 72: zweiter Hydraulikflüssigkeitsbetätigungsraum
- 73: Kühlflüssigkeitsraum
- 74: Kupplungsglocke
- 75: erstes Kühlflüssigkeitsleitblech
- 76: zweites Kühlflüssigkeitsleitblech
- 77: Zylinder
- 78: Zylinder
- 79: Zylinder
- 80a: Doppelkupplung
- 80b: Doppelkupplung
- 80c: Doppelkupplung
- 80d: Anfahrkupplung
- 81: Schraubenfeder
- 82: Reibeinrichtung
- 83: Tellerfeder
- 84: Ringteil
- 85: Stützkragen
- 86: Druckkragen
- 87: Reiblamelle
- 88: Haltekragen
- 89: Dichtung
- 90: Schraube
- 91: Gewindebohrung
- 92: Ring
- 93: Schweißstelle
- 94: Lagerstelle
- 95: Sprengring
- 96: Blende
- 97: Gehäuseende
- 98: Tellerfeder
- 99: Sprengring
- 100: Endplatte
- 101: Sprengring
- 102: Federeinrichtung
- 103: Öffnung
- 104: Zylinder
- 105: Zylinder
- 106: Lippendichtung
- 107: Lippendichtung

- ax: Drehachse

## Patentansprüche

1. Antriebsstrang mit einem Torsionsschwingungsdämpfer (12) mit einer Scheibe (14) und mit einem mit der Scheibe (14) federelastisch um eine Drehachse (ax) drehauslenkbar gekoppelten und die Scheibe (14) wenigstens teilweise umschließenden Torsionsschwingungsdämpfergehäuse (11, 13) und mit einer Kupplungseinrichtung (80a, 80b, 80c, 80d), insbesondere nasslaufender Anfahrkupplung (80d), mit einem um die Drehachse (ax) drehbaren Kupplungsgehäuse (11, 13),
**dadurch gekennzeichnet, dass**
das Torsionsschwingungsdämpfergehäuse (11, 13) drehfest mit dem Kupplungsgehäuse (11, 13) verbunden ist.

2. Antriebsstrang nach Patentanspruch 1,
**dadurch gekennzeichnet, dass**
das Torsionsschwingungsdämpfergehäuse (11, 13) und das Kupplungsgehäuse (11, 13) zusammen ein die Kupplungseinrichtung (80a, 80b, 80c, 80d) und den Torsionsschwingungsdämpfer (12) umschließendes Umgehäuse (11, 13) bilden.

3. Antriebsstrang nach Patentanspruch 2,
**dadurch gekennzeichnet, dass**
das Umgehäuse (11, 13) zur Aufnahme von Betriebsmittel, insbesondere Hydraulikflüssigkeit wie z.B. Druck- und/oder Kühlöl, gegen die Umgebung (74) abgedichtet ist.

4. Antriebsstrang nach einem der vorangegangenen Ansprüche,
**dadurch gekennzeichnet, dass**
eine biege- und/oder taumelweiche Scheibe (18) vorgesehen ist, welche, vorzugsweise an einem Innenumfang, insbesondere drehfest, mit der Scheibe (14) des Torsionsschwingungsdämpfers (12) verbunden ist.

5. Antriebsstrang nach Anspruch 4,
**dadurch gekennzeichnet, dass**
eine Schwungmasse (21) vorgesehen ist, welche, vorzugsweise an einem Außenumfang, insbesondere drehfest, mit der biege- und/oder taumelweichen Scheibe (18) verbunden ist.

6. Antriebsstrang nach einem der Ansprüche 1 bis 3,
**dadurch gekennzeichnet, dass**
eine Schwungmasse (21) vorgesehen ist, welche, vorzugsweise an einem Innenumfang, insbesondere drehfest, mit der Scheibe (14) des Torsionsschwingungsdämpfers (12) verbunden ist.

7. Antriebsstrang nach Anspruch 6,
**dadurch gekennzeichnet, dass**
eine biege- und/oder taumelweiche Scheibe (18) vorgesehen ist, welche, vorzugsweise an einem Außenumfang, insbesondere drehfest, mit der Schwungmasse (21) verbunden ist.

8. Antriebsstrang nach einem der vorangegangenen Ansprüche,
**dadurch gekennzeichnet, dass**
die Kupplungseinrichtung eine, vorzugsweise nasslaufende, Doppelkupplung in achsparalleler Bauart (80a, 80b, 80c), eine, vorzugsweise nasslaufende, Doppelkupplung in konzentrischer Anordnung oder eine, vorzugsweise nasslaufende, Anfahrkupplung (80d) ist.
